Europäisches Patentamt

European Patent Office

Office européen des brevets

(11) Publication number: **0 483 762 A2**

# EUROPEAN PATENT APPLICATION

(21) Application number: **91118430.7**

(22) Date of filing: **29.10.91**

(51) Int. Cl.5: **B23K 35/00**

(30) Priority: **31.10.90 US 607199**

(43) Date of publication of application:
**06.05.92 Bulletin 92/19**

(84) Designated Contracting States:
**DE FR GB NL**

(71) Applicant: **HUGHES AIRCRAFT COMPANY**
**7200 Hughes Terrace**
**Los Angeles, CA 90045-0066(US)**

(72) Inventor: **Turner, Raymond L.**
**2551 Cajon Drive**
**La Habra, California 90631(US)**
Inventor: **Johnson, Kirk E.**
**900 North Golden Springs Drive, Unit G.**
**Diamond Bar, California 91765(US)**
Inventor: **Kimmel, Larry L.**
**6532 Trinette Avenue**
**Garden Grove, California 92645(US)**

(74) Representative: **Patentanwälte Grünecker,**
**Kinkeldey, Stockmair & Partner**
**Maximilianstrasse 58**
**W-8000 München 22(DE)**

(54) **Water-soluble flux for cored solder.**

(57) A non-toxic, non-corrosive water-soluble flux for cored solders comprises (a) botanical oil, (b) an emulsifier, and (c) an organic acid, such as citric acid. The flux of the invention produces solder joints of high metallic luster and excellent quality. Clean-up of flux residues is accomplished using only water.

EP 0 483 762 A2

## CROSS-REFERENCE TO RELATED APPLICATIONS

The present application is a continuation-in-part application of Serial No. 07/       ,       , filed [PD-89640A], which in turn is a continuation-in-part application of Serial No. 07/523,765, filed May 15, 1990, both applications filed in the name of Ray L. Turner and assigned to the same assignee as the present application. The applications disclose and claim a method of soldering using a water-soluble flux which contains a water-soluble organic acid having at least two carboxylic acid groups. A preferred example of such an organic acid is citric acid.

The present application is also related to Serial No. 07/       ,       , [PD-90465] filed the same date as the present application and assigned to the same assignee as the present application. That application discloses and claims a composition of matter useful as a solder paste and a method for using the same.

## TECHNICAL FIELD

The present invention relates to a novel water-soluble, environmentally-safe flux for cored solders, useful in electronic industry soldering processes.

## BACKGROUND ART

Most fluxes and defluxing chemicals used by industry to manufacture electronic circuits, such as military hardware, are either contributing to ozone depletion of the atmosphere or are considered by local environmental agencies, such as the Air Quality Management District in the Los Angeles basin, as environmental pollutants or health hazards. For example, it has been reported that if CFCs (chlorofluorohydrocarbons), which are used in vapor degreasing to clean soldered parts where a rosin flux is employed, are released to the atmosphere, they will remain there as an ozone depletant for nearly 100 years. Other chemicals such as rosin fluxes, alcohols, and the like pose health risks and disposal problems for industry.

Water-soluble fluxes for cored solders are formulations that combine a soldering flux with a thickening agent maintained within a hollow tube of solder.

What is desired is a simple, non-toxic, non-corrosive, environmentally-safe solder flux for cored solders that produces solder joints of high metallic luster and excellent quality.

## DISCLOSURE OF INVENTION

In accordance with the invention, a water-soluble flux for cored solder is provided, comprising (a) botanical oil, (b) emulsifier, and (c) a water-soluble organic acid having at least two carboxylic acid groups.

The flux of the invention eliminates harmful environmental emissions normally associated with rosin-based fluxes, flux thinner (such as iso-propanol), and associated defluxing solvents (such as CFCs). The flux of the invention is environmentally safe, non-toxic, and easy to use. Soldering time is cut in half, and defluxing (cleaning) time is reduced from ten to fifteen minutes (required for rosin-based fluxes) to about three minutes. Soldered assemblies can be cleaned in deionized water, thus eliminating the high capital costs associated with vapor degreasing equipment. The resulting soldered joint exhibits high metallic luster and excellent electrical quality.

## BEST MODES FOR CARRYING OUT THE INVENTION

The flux of the invention comprises (a) botanical oil, (b) emulsifier, and (c) a water-soluble organic acid having at least two carboxylic acid groups. Examples of suitable organic acids include citric acid, malic acid, tartaric acid, glutamic acid, phthalic acid, succinic acid, and the like.

However, the best results have been obtained with citric acid, and while the class of organic acids indicated above is useful, the remainder of the description which follows is directed to the use of citric acid as a flux in cored solders used in soldering components.

Without subscribing to any particular theory, it appears that the citric acid chelates the oxide of the basis metal, but not the metal itself. As a result, there is little or no corrosion of the basis metal by the flux of the invention. Thus, to the extent that members of the above class of organic acids behaves similarly to citric acid, then such members are also included within the ambit of the invention.

The botanical oil serves to level the solder, minimize splattering during the soldering process, and prevent drying of the paste. The oil is used to assist in producing a smooth solder surface. Examples of suitable botanical oils include jojoba oil, palm oil, and peanut oil. Animal fat oils do not clean up easily, and are to be avoided in the practice of the invention.

Any of the well-known water-soluble emulsifiers and surfactants of the cationic, anionic, and non-ionic type may be used in the practice of the invention to assure a reduction in surface tension, enhance solder spread, and aid in flux removal, and as used herein, the term "emulsifier" is intended to also include surfactants. One or more such emulsifiers and surfactants may be employed. Examples of suitable emulsifiers and surfactants include ethylene oxide and propylene oxide and adducts thereto, adducts of glycerol esters, polyoxyethylene sorbitan monopalmitate, polyoxyethylene sorbitan monolaurate, alkyl aryl polyether alcohol, polyoxyethylene sorbitan monooleate, polyoxyethylene sorbitan monostearate, and ethoxylated linear alcohols.

The emulsifier keeps the oil and water in suspension and can act as a thickening agent. The flux must be thin enough to be co-extruded with the solder, but thick enough so as not to exude. The viscosity range of fluxes employed in cored solders is well-known, and does not form a part of this invention.

An aqueous solution of citric acid is used. The citric acid concentration may range from about 3 wt% to saturation of the total flux composition. The amount of water should be minimized to avoid splatter, and accordingly, a saturated solution of citric acid in water is preferably employed. In this connection, an amount of water sufficient to dissolve citric acid (powder, crystals, or granules) is employed. The grade or class of the citric acid is not critical in the practice of the invention, nor is the type or purity of the water used. However, for extremely sensitive electrical circuits, it may be desirable to employ distilled or deionized water and a fairly high grade of citric acid.

Alternatively, a non-toxic medium which ties up free water may be used for lower concentrations of citric acid. An ethoxylated linear alcohol may be used for this purpose.

The flux may contain other components, such as impurities, whether accidental or deliberate, so long as such additives have no adverse effect on the soldering results.

The ratio of emulsifier to citric acid solution is preferably about 1:1; the emulsifier is used to suspend the oil in the citric acid.

An especially preferred flux composition for cored solder consists essentially of the following:

(1) about 1 to 5 wt% botanical oil;

(2) about 47.5 to 49.5 wt% emulsifier; and

(3) about 47.5 to 49.5 wt% citric acid solution (3% to saturated).

Any of the common soldering alloys may be employed, including 60/40 Sn/Pb, 62/2/36 Sn/Ag/Pb, 63/37 Sn/Pb, and 96/4 Sn/Ag. Typically, 60/40 and 63/37 solders are used. As is well-known, a hollow cylinder of the solder is coextruded with the flux to form the composite cored solder.

The flux/cored solder is most advantageously employed in surface mount component soldering processes. The flux contains no volatile organic compounds (VOCs) or other evaporative solvents, such as iso-propyl alcohol. The water-soluble solder flux of the invention avoids the use of rosin-cored solders, which necessitate the use of chlorofluorocarbon-type defluxing agents; rather, the flux of the invention is easily defluxed using deionized water.

The flux of the invention provides the following advantages:

1. It eliminates harmful environmental emissions normally associated with rosin-cored fluxes, flux thinner (such as iso-propyl alcohol), and associated defluxing agents (such as 1,1,1-trichloroethane). Indeed, cleaning of the flux is simply done in warm or hot water. Thus, the new flux is environmentally safe.

2. It provides soldering personnel with a non-toxic, extremely safe, and highly effective flux/cored solder to use.

3. Its use cuts the actual soldering time by approximately 70%. This enables soldering to proceed at a considerably higher rate than permitted by rosin-cored solders, thereby subjecting electronic components to the heat of the solder for a far shorter period of time.

4. Its use provides solder joints that evidence a more lustrous connection with excellent wetting and an estimated 80% reduction in solder defects, compared with rosin-cored solders.

INDUSTRIAL APPLICABILITY

The flux/cored solder of the invention is expected to find use in commercial soldering operations, particularly in soldering electrical components in circuit boards.

Thus, there has been disclosed a non-toxic, non-corrosive, environmentally-safe, water-soluble flux for cored solders, suitable for use in soldering electrical components. It will be clear to those skilled in the art that various changes and modifications of an obvious nature may be made, and all such changes and modifications are considered to fall within the scope of the invention, as defined by the appended claims.

**Claims**

1. A water-soluble flux for cored solders comprising:

(a) at least one botanical oil;

(b) at least one emulsifier; and

(c) an aqueous solution of at least one water-soluble organic acid having at least two carboxylic acid groups.

2. The flux composition of Claim 1 wherein said solder consists essentially of a tin-based solder.

3. The flux composition of Claim 1 wherein said botanical oil comprises an oil selected from the group consisting of jojoba oil, palm oil, and peanut oil.

4. The flux composition of Claim 1 wherein said emulsifier includes at least one surfactant.

5. The flux composition of Claim 4 wherein said surfactant is selected from the group consisting of cationic, anionic, and non-ionic surfactants.

6. The flux composition of Claim 5 wherein said emulsifier and said surfactant are selected from the group consisting of ethylene oxide and propylene oxide and adducts thereto, adducts of glycerol esters, polyoxyethylene sorbitan monopalmitate, polyoxyethylene sorbitan monolaurate, alkyl aryl polyether alcohol, polyoxyethylene sorbitan monooleate, polyoxyethylene sorbitan monostearate, and ethoxylated linear alcohols.

7. The flux composition of Claim 1 wherein said organic acid is selected from the group consisting of citric acid, malic acid, tartaric acid, glutamic acid, phthalic acid, and succinic acid.

8. The flux composition of Claim 7 wherein said organic acid consists essentially of citric acid.

9. The flux composition of Claim 8 wherein said citric acid ranges from about 3 wt% to saturation of the flux composition.

10. The flux composition of Claim 1 consisting essentially of:
    (a) about 1 to 5 wt% botanical oil selected from the group consisting of jojoba oil, palm oil, and peanut oil;
    (b) about 47.5 to 49.5 wt% emulsifier; and
    (c) about 47.5 to 49.5 wt% citric acid solution, said citric acid concentration ranging from about 3 wt% to saturation of said flux composition.